# EUROPÄISCHE PATENTANMELDUNG

(11) **EP 2 375 105 A1**
(43) Veröffentlichungstag der Anmeldung: **12.10.2011**
(21) Anmeldenummer: 11003089.7
(22) Anmeldetag: 12.04.2011
(51) Int. Cl.: F16H 55/08, E05C 9/12

(54) **Zahnrad, Zahnradgetriebe und Beschlag**

(30) Priorität: 12.04.2010 DE 202010004887 U
(71) Anmelder: MACO Technologie GmbH, 5020 Salzburg (AT)
(72) Erfinder: Macheiner, Friedrich, 5023 Salzburg (AT)
(74) Vertreter: Manitz, Finsterwald & Partner GbR

(57) **Zusammenfassung**

Die Erfindung betrifft ein Zahnrad (10) mit einem Körper (12), an dessen radialer Außenseite (14) eine eine Vielzahl von Zähnen (18) umfassende Verzahnung (16) ausgebildet ist, wobei
a) der Körper senkrecht zu einer Drehachse (20) des Zahnrads einen Querschnitt aufweist, der einem Vieleck mit n Ecken (24) (n>2) und n die Ecken verbindenden Seiten (26) entspricht, wobei
b) zumindest eine einer Seite des Vielecks entsprechende Seitenfläche des Körpers einen Verzahnungsabschnitt (16') der Verzahnung umfasst und wobei
c) zumindest eine einer Ecke des Vielecks entsprechende Kante (29) des Körpers einen als Eck-Zahn (16'') ausgebildeten Zahn der Verzahnung bildet.
Die Erfindung betrifft ferner ein Zahnrad (30) mit einem Körper (32), an dessen radialer Außenseite (34) eine eine Vielzahl von Zähnen (38) umfassende Verzahnung (36) ausgebildet ist, wobei die Verzahnung zumindest einen Verzahnungsabschnitt (36') sowie zumindest eine sich gegenüber dem Verzahnungsabschnitt radial nach innen erstreckende Vertiefung (36'') umfasst, die sich in Umfangsrichtung an den Verzahnungsabschnitt anschließt.

## Beschreibung

Die vorliegende Erfindung betrifft ein Zahnrad mit einem Körper, an dessen radialer Außenseite eine eine Vielzahl von Zähnen umfassende Verzahnung ausgebildet ist. Weiterhin ist die Erfindung auf ein Zahnradgetriebe sowie einen Beschlag mit einem Zahnradgetriebe gerichtet.

Zahnräder der eingangs genannten Art weisen üblicherweise senkrecht zu einer Drehachse des Zahnrads einen im Wesentlichen kreisförmigen Querschnitt auf. Derartige Zahnräder werden herkömmlicherweise aus zylindrischen Grundkörpern hergestellt.

Insbesondere wenn ein Zahnrad mit einer Welle in Verbindung stehen soll, die keinen kreisförmigen Querschnitt besitzt, wie beispielsweise ein Vierkantstift eines Fenster- oder Türgriffs, ist die Herstellung einer solchen Verbindung aufwändig.

So ist es zum Beispiel bekannt, zur drehfesten Kopplung eines Zahnrads mit einem Vierkantstift in der Mitte des Zahnrads eine der Querschnittsform des Vierkantstifts entsprechende Öffnung vorzusehen, in die der Vierkantstift zur drehschlüssigen Kopplung eingeschoben werden kann. Hierzu müssen ein Vierkantstift und ein speziell an den Vierkantstift angepasstes Zahnrad separat vorgesehen und miteinander verbunden werden, was mit hohen Lagerungs- und Herstellungskosten verbunden ist. Es ist auch möglich, einen Bereich des Vierkantstifts zur Erzeugung eines kreisförmigen Teilquerschnitts abzudrehen und diesen Bereich mit einer Verzahnung zu versehen. Auch dies erfordert jedoch zusätzliche, kostenintensive Bearbeitungsschritte.

Es ist eine Aufgabe der Erfindung, ein Zahnrad zu schaffen, das mit verringertem Aufwand hergestellt werden kann und das sich zur Verwendung in Verbindung mit einer Welle eignet, deren Querschnitt von der Kreisform abweicht und insbesondere vieleckig ist.

Zur Lösung dieser Aufgabe ist ein Zahnrad mit den Merkmalen des Anspruchs 1 vorgesehen.

Das Zahnrad hat einen Körper, an dessen radialer Außenseite eine eine Vielzahl von Zähnen umfassende Verzahnung ausgebildet ist, wobei der Körper senkrecht zu einer Drehachse des Zahnrads einen Querschnitt aufweist, der einem Vieleck mit n Ecken (n > 2) und n die Ecken verbindenden Seiten entspricht, wobei zumindest eine einer Seite des Vielecks entsprechende Seitenfläche des Körpers einen Verzahnungsabschnitt der Verzahnung umfasst und wobei zumindest eine eine Ecke des Vielecks entsprechende Kante des Körpers einen als Eck-Zahn ausgebildeten Zahn der Verzahnung bildet.

Anstatt eines kreisförmigen Querschnitts weist das erfindungsgemäße Zahnrad also senkrecht zu einer Drehachse einen Querschnitt auf, der einem Vieleck entspricht. Ein solches Zahnrad kann direkt aus einem Grundkörper hergestellt werden, der senkrecht zu einer Drehachse einen Querschnitt aufweist, der einem Vieleck mit n Ecken und n die Ecken verbindenden Seiten entspricht. Zur Bildung des zumindest einen Verzahnungsabschnitts können dann entsprechende Vertiefungen in einer Seitenfläche des Grundkörpers eingebracht werden, die einer Seite des vieleckigen Querschnitts des Grundkörpers entspricht.

Ein solches Zahnrad kann beispielsweise einteilig und materialeinheitlich mit einer in Richtung der Drehachse langgestreckten Welle ausgebildet sein, die im Wesentlichen einen Querschnitt eines Vielecks aufweist. Hierzu kann das Zahnrad über die gesamte Länge oder auch nur über einen Teillängenbereich der Welle ausgebildet sein. Wenn eine Welle mit vieleckigem Querschnitt mit dem Zahnrad in Verbindung stehen soll, muss das Zahnrad somit nicht mehr gesondert vorgesehen und drehfest mit der Welle verbunden werden, sondern kann in einfacher Weise einteilig und insbesondere materialeinheitlich mit der Welle ausgebildet werden. Bei der Welle kann es sich dabei insbesondere um den Vierkantstift eines Betätigungselements eines Beschlags für ein Fenster, eine Tür oder dergleichen handeln.

Vorteilhafte Ausführungsformen der Erfindung sind in den Unteransprüchen, der Beschreibung und den Zeichnungen beschrieben.

So kann gemäß einer ersten Ausführungsform jede einer Seite des Vielecks entsprechende Seitenfläche des Körpers einen Verzahnungsabschnitt der Verzahnung umfassen und jede einer Ecke des Vielecks entsprechende Kante des Körpers einen als Eck-Zahn ausgebildeten Zahn der Verzahnung bilden. Auf diese Weise kann die Verzahnung über den gesamten Umfang der radialen Außenseite ausgebildet werden, sodass das Zahnrad über den vollen Drehwinkelbereich von 360° um die Drehachse antriebswirksam mit einem entsprechenden Gegenzahnrad gekoppelt werden kann. Grundsätzlich ist es jedoch auch möglich, dass nicht alle, sondern nur einige oder sogar nur eine Seitenfläche des Körpers einen Verzahnungsabschnitt umfassen. Entsprechendes gilt auch für die Ausbildung der Eck-Zähne.

Bevorzugt sind zumindest zwei Verzahnungsabschnitte vorgesehen und die Verzahnungsabschnitte im Wesentlichen identisch ausgebildet. Auf diese Weise kann ein Zahnrad mit einer regelmäßigen Verzahnung geschaffen werden, wodurch eine besonders gleichmäßige Kraftübertragung durch das Zahnrad gewährleistet werden kann.

Gemäß einer vorteilhaften Ausführungsform entspricht der Querschnitt des Körpers im Wesentlichen einem regelmäßigen Vieleck und/oder einem Viereck, insbesondere im Wesentlichen einem Quadrat. Im Rahmen der Erfindung kann der Querschnitt des Körpers aber auch im Wesentlichen einem insbesondere regelmäßigen n-Eck mit n = 3, 5, 6, 7, 8 oder n > 8 entsprechen.

Bevorzugt ist die Drehachse in der Mitte des vieleckigen Querschnitts des Zahnrads angeordnet. Insbesondere kann der Körper symmetrisch zu der Drehachse ausgebildet sein.

Die Seiten des Vielecks verlaufen vorzugsweise geradlinig, können aber auch leicht bogenförmig verlaufen. Vorzugsweise besteht das Zahnrad aus Metall. Das Zahnrad kann dann aus einem metallischen Grundkörper hergestellt werden, insbesondere einem gezogenen metallischen Grundkörper.

Gemäß einer vorteilhaften Ausführungsform ist der Körper in der Richtung der Drehachse langgestreckt ausgebildet. Hierbei kann die Verzahnung über einen Teil der Länge des Körpers oder über die gesamte Länge des Körpers ausgebildet sein. Der Körper kann beispielsweise einen Vierkantstift einer Betätigungseinheit für ein Fenster, eine Tür oder dergleichen bilden. Hierbei kann die Verzahnung insbesondere in einem Endbereich des Vierkantstifts ausgebildet sein, um als Eingangszahnrad für ein Beschlaggetriebe zu dienen, mit dem die Betätigungseinheit gekoppelt ist.

Weiterer Gegenstand der Erfindung ist ein Zahnrad gemäß Anspruch 7. Das Zahnrad hat einen Körper, an dessen radialer Außenseite eine eine Vielzahl von Zähnen umfassende Verzahnung ausgebildet ist, wobei die Verzahnung zumindest einen Verzahnungsabschnitt sowie zumindest eine sich gegenüber dem Verzahnungsabschnitt radial nach innen erstreckende Vertiefung umfasst, die sich in Umfangsrichtung an den Verzahnungsabschnitt anschließt.

Ein solches Zahnrad kann mit einem wie vorstehend beschriebenen Zahnrad mit im Wesentlichen vieleckigen Querschnitt ein Zahnradgetriebe bilden, bei dem beide Zahnräder miteinander kämmen.

Gemäß einer vorteilhaften Ausführungsform weist die Verzahnung des nach Anspruch 7 ausgebildeten Zahnrads mehrere Verzahnungsabschnitte und mehrere sich gegenüber den Verzahnungsabschnitten radial nach innen erstreckende Vertiefungen auf, wobei zwischen zwei Verzahnungsabschnitten jeweils eine Vertiefung ausgebildet ist. Die Verzahnungsabschnitte und/oder die Vertiefungen können hierbei jeweils im Wesentlichen identisch ausgebildet sein. Auf diese Weise kann eine regelmäßige Verzahnung und somit eine besonders günstige Kraftübertragung durch das Zahnrad gewährleistet werden. Bevorzugt ist die Verzahnung über den gesamten Umfang des Zahnrads ausgebildet, sodass das Zahnrad über den gesamten Drehwinkelbereich von 360° um die Drehachse herum antriebswirksam mit einem weiteren Zahnrad gekoppelt werden kann.

Weiterer Gegenstand der Erfindung ist ein Zahnradgetriebe gemäß Anspruch 9. Das Zahnradgetriebe umfasst ein erstes Zahnrad und ein mit dem ersten Zahnrad in Eingriff stehendes zweites Zahnrad, wobei das erste Zahnrad um eine erste Drehachse und das zweite Zahnrad um eine zur ersten Drehachse parallele zweite Drehachse drehbar gelagert sind. Das erste Zahnrad ist dabei ein wie vorstehend beschriebenes Zahnrad, welches die Merkmale des Anspruchs 1 aufweist, und das zweite Zahnrad ist ein wie vorstehend beschriebenes Zahnrad, welches die Merkmale des Anspruchs 7 aufweist. In einem solchen Zahnradgetriebe können das erste und das zweite Zahnrad so in Eingriff stehen, dass ein Eck-Zahn des ersten Zahnrads in eine sich gegenüber einem Verzahnungsabschnitt radial nach innen erstreckende Vertiefung der Verzahnung des zweiten Zahnrads eingreift und die Verzahnungsabschnitte des ersten und zweiten Zahnrads ineinander eingreifen.

Das erste und zweite Zahnrad des Zahnradgetriebes können jeweils einer vorstehend beschriebenen bevorzugten Ausführungsform eines Zahnrads gemäß Anspruch 1 bzw. eines Zahnrads gemäß Anspruch 7 entsprechen. Die vorstehend beschriebenen Vorteile gelten entsprechend.

Weiterer Gegenstand der Erfindung ist eine Betätigungseinheit für Fenster, Türen oder dergleichen nach Anspruch 10. Die Betätigungseinheit umfasst einen Griff und ein drehfest mit dem Griff gekoppeltes oder koppelbares Betätigungselement, wobei das Betätigungselement ein wie vorstehend beschriebenes Zahnrad mit den Merkmalen des Anspruchs 1 aufweist. Das Zahnrad der Betätigungseinheit kann einer vorstehend beschriebenen Ausführungsform eines Zahnrads mit den Merkmalen des Anspruchs 1 entsprechen. Die vorstehend beschriebenen Vorteile gelten entsprechend.

Bevorzugt ist das Betätigungselement durch einen Vierkantstift mit im Wesentlichen quadratischem Querschnitt gebildet. Das Zahnrad weist dabei ebenfalls einen im Wesentlichen quadratischen Querschnitt auf und kann über die gesamte Länge des Vierkantstifts oder nur über einen Teillängenbereich ausgebildet sein, insbesondere in einem von dem Griff abgewandten Endbereich des Vierkantstifts. Eine solche Betätigungseinheit kann besonders einfach hergestellt werden, indem in einen quadratischen Vierkantstift mit ebenen Seitenflächen entsprechende Vertiefungen eingebracht werden. Bei dem ursprünglichen Vierkantstift kann es sich dabei insbesondere um einen gezogenen Metallkörper handeln.

Weiterer Gegenstand der Erfindung ist ein Beschlag für Fenster, Türen oder dergleichen mit einer Treibstange, einer Stulpschiene und einem Getriebe mit einem Eingangszahnrad, wobei als Eingangszahnrad ein vorstehend beschriebenes Zahnrad nach einem der Ansprüche 1 bis 6 vorgesehen ist. Insbesondere kann der Beschlag als Beschlag für zweiflügelige, insbesondere setzholzfreie Fenster, Türen oder dergleichen ausgebildet sein.

Gemäß einer vorteilhaften Ausführungsform umfasst der Beschlag eine vorstehend beschriebene Betätigungseinheit, wobei das Zahnrad des Betätigungselements der Betätigungseinheit das Eingangszahnrad des Getriebes bildet und wobei das Eingangszahnrad in dem Getriebe um eine erste Drehachse drehbar gelagert ist. Dabei ist es bevorzugt, wenn die erste Drehachse von einer Stirnseite des Beschlags her betrachtet vor einer Hauptebene der Stulpschiene liegt und das Getriebe ein um eine zweite Drehachse drehbar gelagertes Übersetzungszahnrad mit einer Antriebs-Verzahnung und einer Abtriebs-Verzahnung aufweist, wobei die Antriebs-Verzahnung ausgebildet ist, um mit dem Eingangszahnrad zu kämmen, und die Abtriebs-Verzahnung mit entsprechenden Ausnehmungen der Treibstange kämmt und wobei die Abtriebs-Verzahnung bezogen auf die zweite Drehachse einen größeren Radius aufweist als die Antriebs-Verzahnung.

Ein solcher Beschlag eignet sich insbesondere zur Verwendung in einem zweiflügeligen, setzholzfreien Fenster. Im Gegensatz zu üblichen Beschlägen, bei denen die erste Drehachse vor der Hauptebene der Stulpschiene liegt, wird dabei durch den erfindungsgemäßen Beschlag und insbesondere durch die Anordnung der ersten Drehachse vor einer Hauptebene der Stulpschiene eine optisch besonders ansprechende Lösung ermöglicht. So kann die erste Drehachse zum Beispiel in der Mitte einer Falzluft zwischen aufschlagendem und unterschlagendem Flügel angeordnet sein, wodurch eine symmetrische Innenansicht des Fensters geschaffen werden kann. Gleichzeitig wird durch den erfindungsgemäßen Beschlag nur ein geringer Platzbedarf des Beschlags außerhalb der Falznut eines Flügels geschaffen, in die der Beschlag eingesetzt ist bzw. eingesetzt werden kann.

Weiterer Gegenstand der Erfindung ist ein Fenster, eine Tür oder dergleichen mit einem vorstehend beschriebenen und in einer Falznut des Flügels des Fensters, der Tür oder dergleichen angeordneten Beschlag. Insbesondere kann es sich dabei um ein zweiflügeliges, setzholzfreies Fenster oder eine zweiflügelige, setzholzfreie Tür handeln.

Hierbei ist es besonders bevorzugt, wenn das Getriebe bereichsweise in einer zwischen den einander gegenüberliegenden Falzen zweier Flügel des Fensters, der Tür oder dergleichen ausgebildeten Falzluft angeordnet ist und die Welle eine Schlagleiste des Flügels, in dem das Getriebe angeordnet ist, durchgreift, insbesondere wobei die erste Drehachse bezogen auf eine Breite der Falzluft und/oder der Schlagleiste ungefähr mittig in der Falzluft bzw. der Schlagleiste angeordnet ist.

Hierdurch kann eine symmetrische Innenansicht des Fensters und damit eine optisch besonders ansprechende Lösung geschaffen werden.

Nachfolgend wir die vorliegende Erfindung rein beispielhaft anhand einer vorteilhaften Ausführungsform unter Bezugnahme auf die beigefügten Zeichnungen beschrieben. Es zeigen:
- Fig. 1: eine Querschnittsansicht eines erfindungsgemäßen Zahnrads mit den Merkmalen des Anspruchs 1;
- Fig. 2: eine Querschnittsansicht eines erfindungsgemäßen Zahnrads mit den Merkmalen des Anspruchs 7;
- Fig. 3: eine Querschnittsansicht eines erfindungsgemäßen Zahnradgetriebes nach einer ersten Ausführungsform;
- Fig. 4: eine Querschnittsansicht eines erfindungsgemäßen Zahnradgetriebes nach einer zweiten Ausführungsform;
- Fig. 5: eine seitliche Ansicht eines erfindungsgemäßen Beschlags;
- Fig. 6: eine stirnseitige Ansicht des Beschlags von Fig. 1; und
- Fig. 7: eine Querschnittsansicht eines aufschlagenden Flügels eines zweiflügeligen, setzholzfreien Fensters mit einem in eine Falznut des Flügels eingesetzten Beschlags.

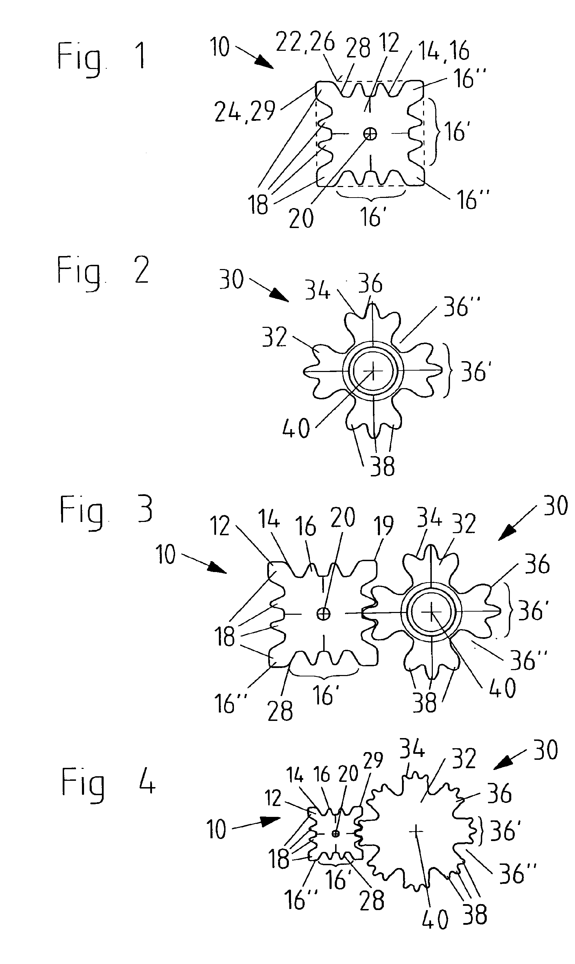

Fig. 1 zeigt ein Zahnrad 10 mit einem Körper 12, an dessen radialer Außenseite 14 eine Verzahnung 16 ausgebildet ist, die eine Vielzahl von Zähnen 18 umfasst. In Fig. 1 ist der Querschnitt des Zahnrads 10 senkrecht zur Drehachse 20 des Zahnrads 10 gezeigt. Wie in Fig. 1 durch gestrichelte Linien angedeutet, entspricht der Außenquerschnitt des Körpers 12 im Wesentlichen einem Quadrat 22 mit vier Ecken 24 und vier die Ecken 24 verbindenden Seiten 26. Jede der Seitenflächen 28 des Körpers 12, die einer Seite 26 des Quadrats 22 entspricht, umfasst einen Verzahnungsabschnitt 16' der Verzahnung 16. Jede Kante 29 des Körpers 12, die einer Ecke 24 des Quadrats 22 entspricht, bildet einen als Eck-Zahn 16" ausgebildeten Zahn 18 der Verzahnung 16. Im vorliegenden Ausführungsbeispiel umfasst jeder zwischen Eck-Zähnen 16" angeordneter Verzahnungsabschnitt 16' zwei Zähne 18 der Verzahnung 16. Ebenso könnte der Verzahnungsabschnitt 16' aber auch nur einen Zahn oder drei oder mehr Zähne umfassen.

Der Körper 12 ist in Richtung der Drehachse 20 gerade und langgestreckt ausgebildet. In dem Teillängenbereich des Körpers 12, in dem die Verzahnung 16 ausgebildet ist, weist der Körper 12 dabei im Wesentlichen einen gleich bleibenden Außenquerschnitt auf, sodass eine Verzahnung 16 gebildet wird, die gerade in Richtung der Drehachse 20 verläuft.

Das Zahnrad 10 ist so ausgebildet, dass es um die Drehachse 20 drehbar lagerbar ist, wobei sich die Drehachse 20 in der Mitte des quadratischen Querschnitts befindet.

Die Verzahnungsabschnitte 16' und die Eck-Zähne 16" sind dabei jeweils im Wesentlichen identisch ausgebildet, sodass sich eine regelmäßige Verzahnung 16 ergibt. Die Seiten 26 des quadratischen Querschnitts 22 verlaufen dabei geradlinig. Die Seiten 26 könnten im Rahmen der Erfindung prinzipiell aber auch leicht bogenförmig, insbesondere konvex verlaufen. Das Zahnrad 10 kann hergestellt werden, indem in einen Körper, dessen Querschnitt dem Quadrat 22 entspricht, zur Ausbildung der Verzahnungsabschnitte 16' zwischen den Ecken 24 und von den Ecken 24 beabstandet Vertiefungen eingebracht werden, beispielsweise durch einen geeigneten Materialverformungs- und/oder -entfernungsprozess wie etwa Fräsen oder Rändeln.

Fig. 2 zeigt ein Zahnrad 30 mit einem Körper 32, an dessen radialer Außenseite 34 eine Verzahnung 36 ausgebildet ist, die eine Vielzahl von Zähnen 38 umfasst. Die Verzahnung 36 umfasst vier Verzahnungsabschnitte 36' sowie vier Vertiefungen 36". Das Zahnrad ist um eine in der Mitte des Querschnitts gelegene Drehachse 40 drehbar lagerbar. Jede der Vertiefungen 36" befindet sich in Umfangsrichtung zwischen zwei Verzahnungsabschnitten 36' und erstreckt sich gegenüber diesen Verzahnungsabschnitten 36' radial zur Drehachse 40 des Zahnrads 30 nach innen.

Da sich die Vertiefungen 36" gegenüber den Verzahnungsabschnitten 36' radial nach innen erstrecken, können sie die Eck-Zähne 16" eines wie in Fig. 1 gezeigten Zahnrads 10 aufnehmen. Weiterhin können die Verzahnungsabschnitte 36' des Zahnrads 30 mit den zwischen den Eck-Zähnen 16" gelegenen Verzahnungsabschnitten 16' des Zahnrads 10 von Fig. 1 kämmen.

Im Bereich der Verzahnung 36 weist der Körper 32 in Richtung der Drehachse 40 einen im Wesentlichen gleich bleibenden Außenquerschnitt auf, sodass sich eine gerade Verzahnung 36 ergibt.

Die Verzahnungsabschnitte 36' und die Vertiefungen 36" sind dabei jeweils im Wesentlichen identisch ausgebildet, sodass sich eine regelmäßige Verzahnung 36 ergibt. Die Verzahnungsabschnitte 36' verlaufen dabei leicht um die Drehachse 30 gebogen, wobei der Radius der Biegung in etwa dem Radius des Zahnrads 30 entspricht.

Fig. 3 zeigt ein Zahnradgetriebe nach einer ersten Ausführungsform mit einem wie in Fig. 1 gezeigten ersten Zahnrad 10 und einem wie in Fig. 2 gezeigten zweiten Zahnrad 30. Die beiden Zahnräder 10, 30 sind dabei um parallele Drehachsen 20, 40 drehbar gelagert und kämmen miteinander.

Die Verzahnungen 16, 36 der beiden Zahnräder 10, 30 weisen eine identische Anzahl von Zähnen 18, 38 auf, sodass im Betrieb des Getriebes eine volle Umdrehung des einen Zahnrads 10 einer vollen Umdrehung des anderen Zahnrads 30 entspricht und somit eine Übersetzung von 1:1 erreicht wird.

Fig. 4 zeigt ein Zahnradgetriebe nach einer zweiten Ausführungsform. Das Zahnradgetriebe entspricht im Wesentlichen dem in Fig. 3 gezeigten Zahnradgetriebe mit dem Unterschied, dass das in Fig. 4 gezeigte zweite Zahnrad 40 zweimal so viele Zähne 38 aufweist wie das erste Zahnrad 10, sodass während des Betriebs eine Umdrehung des ersten Zahnrads 10 einer halben Umdrehung des zweiten Zahnrads 30 entspricht. Das Getriebe besitzt somit eine Übersetzung von 1:2.

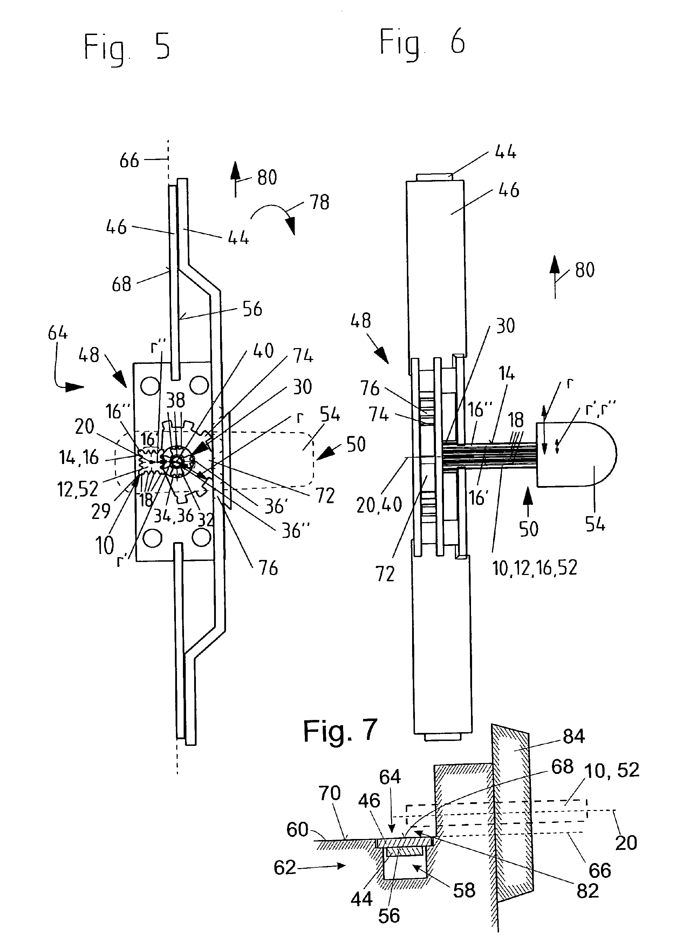

Die Fig. 5 bis 7 zeigen einen Beschlag gemäß einer Ausführungsform der Erfindung. Der in Fig. 5 und Fig. 6 gezeigte Beschlag umfasst eine Treibstange 44 und eine Stulpschiene 46 sowie ein Getriebe 48 mit einem Eingangszahnrad 10, welches wie in Fig. 1 gezeigt ausgebildet ist. Das Eingangszahnrad 10 ist Teil einer Betätigungseinheit 50 des Beschlags und bildet ein als Vierkantstift ausgebildetes Betätigungselement 52 der Betätigungseinheit 50, das drehfest mit einem Griff 54 verbunden ist (siehe Fig. 6). Wie in Fig. 6 gezeigt, sind dabei das Eingangszahnrad 10 und seine Verzahnung 16 im Wesentlichen über die gesamte Länge des Betätigungselements 52 ausgebildet.

Das Eingangszahnrad 10 ist um eine erste Drehachse 20 drehbar gelagert. Die Treibstange 44 ist an einer Innenseite 56 der Stulpschiene 46 parallel zu dieser verschiebbar angeordnet. Im Bereich des Getriebes 48 weist die Treibstange 44 eine von der Stulpschiene 46 weg weisende Abkröpfung auf.

Der Beschlag ist zum Einsetzen in eine Falznut 58 ausgebildet, die in einem Falz 60 eines Flügels 62 eines Fensters, einer Tür oder dergleichen ausgebildet ist (siehe Fig. 7).

Der Beschlag weist eine Stirnseite 64 auf, die bei in die Falznut 58 eingesetztem Beschlag vom Inneren der Falznut 58 weg weist.

Die erste Drehachse 20 ist so angeordnet, dass sie bei in die Falznut 58 eingesetztem Beschlag außerhalb der Falznut 58 verläuft, wie in Fig. 7 angedeutet. Hierzu ist die erste Drehachse 20 von der Stirnseite 64 des Beschlags her betrachtet vor einer Hauptebene 66 der Stulpschiene 46 angeordnet. Die Hauptebene 66 ist durch eine stirnseitige Außenseite 64 der Stulpschiene 46 definiert, die bei in die Falznut 58 eingesetztem Beschlag im Wesentlichen parallel zu einer Falzfläche 70 verläuft und im Wesentlichen bündig mit der Falzfläche 70 abschließt.

Das Getriebe 48 umfasst eine zur ersten Drehachse 20 parallele zweite Drehachse 40, um die ein Übersetzungszahnrad 72 drehbar gelagert ist. Das Übersetzungszahnrad 72 bildet ein wie in Fig. 2 gezeigtes Zahnrad 30, dessen Verzahnung 36 als Antriebsverzahnung des Übersetzungszahnrads 72 dient und mit der Verzahnung 16 des Eingangszahnrads 10 kämmt. Das Übersetzungszahnrad 72 weist ferner eine Abtriebsverzahnung 74 auf, die mit Ausnehmungen 76 der Treibstange 44 kämmt. Die Antriebs-verzahnung 36 und die Abtriebsverzahnung 74 sind drehfest miteinander gekoppelt, so dass beide Verzahnungen 36, 74 stets den gleichen Drehwinkel um die gemeinsame Drehachse 40 aufweisen. Im vorliegenden Ausführungsbeispiel ist das Übersetzungszahnrad 72 hierzu einstückig ausgebildet. Prinzipiell ist aber auch eine mehrstückige Ausbildung des Übersetzungszahnrads 72 denkbar, bei der Antriebsverzahnung 36 und Abtriebsverzahnung 74 auf geeignete Weise drehfest miteinander gekoppelt sind, beispielsweise durch form- oder kraftschlüssige Kopplung der einzelnen Stücke.

Die Abtriebsverzahnung 74 weist einen Radius r auf, der größer ist als ein Radius r' der Antriebsverzahnung 36. Das Eingangszahnrad 10 weist einen Radius r" auf, der mit dem Radius r' der Antriebsverzahnung 36 ungefähr identisch ist und somit ebenfalls kleiner ist als der Radius r der Abtriebsverzahnung 74. Somit wird eine Drehbewegung des relativ klein ausgestalteten Eingangszahnrads 10 über das Übersetzungszahnrad 72 in einen relativ großen Treibstangenhub umgewandelt.

Der Beschlag weist somit einerseits die gewünschte Anordnung der ersten Drehachse 20 außerhalb der Falznut 58 auf (Fig. 7) und benötigt andererseits einen nur geringen Platzbedarf für das Getriebe 48 außerhalb der Falznut 58. Aufgrund des relativ kleinen Radius r" der Verzahnung 16 des Eingangszahnrads 10 ist es problemlos möglich, die Verzahnung 16 des Eingangszahnrads 10 wie im vorliegenden Ausführungsbeispiel über den vollen 360°-Winkel vorzusehen, ohne dabei einen übermäßigen Platzbedarf in Kauf nehmen zu müssen.

Dadurch, dass die zweite Drehachse 40 in einer Richtung senkrecht zur Stulpschiene 46 hinter der ersten Drehachse 20 angeordnet ist, wird gleichzeitig gewährleistet, dass auch die Abtriebsverzahnung 74 mit dem relativ großen Radius r nicht senkrecht zur Stulpschiene 46 über das Eingangszahnrad 10 hervorsteht und somit der Platzbedarf des Getriebes 48 außerhalb der Falznut 58 gering gehalten wird.

Durch die Ausgestaltung der Verzahnungen 16, 36 und 74 wird eine Schaltbarkeit des Beschlags über einen für einen Dreh-Kippbeschlag üblicherweise notwendigen 180°-Schaltbereich des Betätigungselements 52 gewährleistet. Die in Fig. 5 dargestellte Schaltstellung entspricht dabei der Drehöffnungs-Schaltstellung des Beschlags, in der sich die Treibstange 44 in einer mittleren Schaltposition befindet. Der in Fig. 5 durch gestrichelte Linien angedeutete Griff 54 der Betätigungseinheit 50 ist in dieser Schaltstellung des Beschlags waagrecht nach rechts orientiert.

Durch Drehen des Griffs 54 und des damit verbundenen Eingangszahnrads 10 in Richtung des Pfeils 78 kann der Beschlag in die Schließ-Schaltstellung geschaltet werden, in der der Griff 54 senkrecht nach unten weist. Die Treibstange 44 wird dabei in Richtung des Pfeils 80 in eine obere End-Schaltposition verschoben. Durch Drehen des Griffs 54 entgegen der Richtung des Pfeils 87 kann der Beschlag in die Kipp-Schaltstellung geschaltet werden, in der der Griff 54 senkrecht nach oben weist. Die Treibstange 44 wird dabei entgegen der Richtung des Pfeils 80 in eine untere End-Schaltposition verschoben.

Durch Drehen des Eingangszahnrads 10 bzw. des Griffs 54 in Richtung des Pfeils 78 wird die Treibstange 44 also in Richtung des Pfeils 80 verschoben. Dies entspricht der insbesondere bei Dreh-Kippbeschlägen gängigen Beziehung zwischen Drehrichtung des Griffs 54 und Verschiebungsrichtung der Treibstange 44, sodass der Dreh-Kipp-Beschlag in der üblichen Weise betätigt und dabei zur Gewährleistung einer Kipp-Funktionalität ohne weiteres mit handelsüblichen Ausstellscheren kombiniert werden kann, die von einer unteren End-Schaltstellung der Treibstange 44 in der Kipp-Schaltstellung des Beschlags ausgehen.

Bei dem in Fig. 5 bis 7 dargestellten Beschlag ist die Abtriebsverzahnung 74 gegenüber der Antriebsverzahnung 36 und dem Eingangszahnrad 10 in Richtung der zweiten Drehachse 40 versetzt angeordnet. Dies ist in Fig. 6 erkennbar. Hierdurch wird eine Behinderung des Übersetzungszahnrads 72 durch das Eingangszahnrad 10 in sämtlichen Schaltstellungen des Beschlags wirksam vermieden.

Damit das Eingangszahnrad 10 zur Gewährleistung einer Links- Rechtsverstellbarkeit auch von der anderen Seite her mit dem Beschlag gekoppelt werden kann, kann das Übersetzungszahnrad 72 auf der der dargestellten Antriebsverzahnung 36 gegenüberliegenden Seite eine zweite, nicht dargestellte Antriebsverzahnung zur Kopplung mit einem von der anderen Seite des Beschlags her eingesetzten Eingangszahnrad aufweisen.

In Fig. 7 ist im Querschnitt der Beschlag von Fig. 5 und 6 gezeigt, der in eine Falznut 58 eingebaut ist. Die Falznut 58 ist in einem überschlagenden Flügel 62 eines zweiflügeligen, setzholzfreien Fensters ausgebildet. Zwischen der Falzfläche 70 und einer entsprechenden, der Falzfläche 70 zugewandten Falzfläche des nicht dargestellten zweiten Flügels ist eine Falzluft 82 ausgebildet, in die der außerhalb der Falznut 58 befindliche Teil des Getriebes 48 hineinragt. Der Flügel 62 umfasst eine Schlagleiste 84, die durch die in Fig. 7 nur schematisch dargestellte erste Drehachse 20 etwa mittig durchgriffen wird, sodass eine symmetrische Innenansicht des Fensters erreicht wird.

Durch die erfindungsgemäße Ausbildung des Eingangszahnrads 10 als Vierkantzahnrad kann das Eingangszahnrad unmittelbar als Vierkantstift des Griffs 54 ausgebildet sein. Dabei ist durch die Ausbildung als Vierkantstift gewährleistet, dass das Eingangszahnrad 10 in üblicher Weise in eine Vierkantaufnahme eines handelsüblichen Griffs 54 einsetzt werden kann. Die erfindungsgemäße Ausbildung der Verzahnung 36 des Übersetzungszahnrads 72 gewährleistet dabei, dass trotz des Vierkantquerschnitts des Eingangszahnrads 10 dieses problemlos mit dem Übersetzungszahnrad 72 kämmen kann.

### Bezugszeichenliste

- 10: Zahnrad
- 12: Körper
- 14: Außenseite
- 16: Verzahnung
- 16': Verzahnungsabschnitt
- 16": Eck-Zahn
- 18: Zahn
- 20: Drehachse
- 22: Quadrat
- 24: Ecke
- 26: Seite
- 28: Seitenfläche
- 29: Kante
- 30: Zahnrad
- 32: Körper
- 34: Außenseite
- 36: Verzahnung
- 36': Verzahnungsabschnitt
- 36": Vertiefung
- 38: Zahn
- 40: Drehachse
- 44: Treibstange
- 46: Stulpschiene
- 48: Getriebe
- 50: Betätigungseinheit
- 52: Betätigungselement
- 54: Griff
- 56: Innenseite
- 58: Falznut
- 60: Falz
- 62: Flügel
- 64: Stirnseite
- 66: Hauptebene
- 68: Außenseite
- 70: Falzfläche
- 72: Übersetzungszahnrad
- 74: Abtriebsverzahnung
- 76: Ausnehmung
- 78, 80: Pfeil
- 82: Falzluft
- 84: Schlagleiste
- r, r', r": Radius

## Patentansprüche

1. Zahnrad (10) mit einem Körper (12), an dessen radialer Außenseite (14) eine eine Vielzahl von Zähnen (18) umfassende Verzahnung (16) ausgebildet ist,
**dadurch gekennzeichnet ,**
a) **dass** der Körper (12) senkrecht zu einer Drehachse (20) des Zahnrads (10) einen Querschnitt aufweist, der einem Vieleck mit n Ecken (24) (n>2) und n die Ecken (24) verbindenden Seiten (26) entspricht,
b) **dass** zumindest eine einer Seite (26) des Vielecks entsprechende Seitenfläche (28) des Körpers (12) einen Verzahnungsabschnitt (16') der Verzahnung (16) umfasst und
c) **dass** zumindest eine einer Ecke (24) des Vielecks entsprechende Kante (29) des Körpers (12) einen als Eck-Zahn (16") ausgebildeten Zahn (18) der Verzahnung (16) bildet.

2. Zahnrad (10) nach Anspruch 1,
**dadurch gekennzeichnet ,**
**dass** jede einer Seite (26) des Vielecks entsprechende Seitenfläche (28) des Körpers (12) einen Verzahnungsabschnitt (16') der Verzahnung (16) umfasst und dass jede einer Ecke (24) des Vielecks entsprechende Kante (29) des Körpers (12) einen als Eck-Zahn (16") ausgebildeten Zahn (18) der Verzahnung (16) bildet.

3. Zahnrad (10) nach Anspruch 1 oder 2,
**dadurch gekennzeichnet,**
**dass** zumindest zwei Verzahnungsabschnitte (16') vorgesehen sind und die Verzahnungsabschnitte (16') im Wesentlichen identisch ausgebildet sind.

4. Zahnrad (10) nach zumindest einem der vorhergehenden Ansprüche,
**dadurch gekennzeichnet,**
**dass** der Querschnitt des Körpers (12) im Wesentlichen einem regelmäßigen Vieleck und/oder einem Viereck, insbesondere im Wesentlichen einem Quadrat (22) entspricht.

5. Zahnrad (10) nach zumindest einem der vorhergehenden Ansprüche,
**dadurch gekennzeichnet,**
**dass** die Drehachse (20) in der Mitte des vieleckigen Querschnitts des Zahnrads (10) angeordnet ist, insbesondere dass der Körper (12) symmetrisch zu der Drehachse (20) ausgebildet ist.

6. Zahnrad (10) nach zumindest einem der vorhergehenden Ansprüche, **dadurch gekennzeichnet,**
**dass** die Seiten (26) des Vielecks geradlinig oder leicht bogenförmig verlaufen und/oder
**dass** das Zahnrad (10) aus Metall besteht und/oder dass der Körper (12) in Richtung der Drehachse (20) langgestreckt ausgebildet ist und insbesondere einen Vierkantstift einer Betätigungseinheit (50) für ein Fenster, eine Tür oder dergleichen bildet.

7. Zahnrad (30) mit einem Körper (32), an dessen radialer Außenseite (34) eine eine Vielzahl von Zähnen (38) umfassende Verzahnung (36) ausgebildet ist,
**dadurch gekennzeichnet ,**
**dass** die Verzahnung (36) zumindest einen Verzahnungsabschnitt (36') sowie zumindest eine sich gegenüber dem Verzahnungsabschnitt (36') radial nach innen erstreckende Vertiefung (36") umfasst, die sich in Umfangsrichtung an den Verzahnungsabschnitt (36') anschließt.

8. Zahnrad (30) nach Anspruch 7,
**dadurch gekennzeichnet,**
**dass** die Verzahnung (36) mehrere Verzahnungsabschnitte (36') und mehrere sich gegenüber den Verzahnungsabschnitten (36') radial nach innen erstreckende Vertiefungen (36") umfasst, wobei zwischen zwei Verzahnungsabschnitten (36') jeweils eine Vertiefung (36") ausgebildet ist, insbesondere wobei die Verzahnungsabschnitte (36') und/oder die Vertiefungen (36") jeweils im Wesentlichen identisch ausgebildet sind, und/oder dass
die Verzahnung (36) über den gesamten Umfang des Zahnrads (30) ausgebildet ist.

9. Zahnradgetriebe mit einem ersten Zahnrad (10) und einem mit dem ersten Zahnrad (10) in Eingriff stehenden zweiten Zahnrad (30), wobei das erste Zahnrad (10) um eine erste Drehachse (20) und das zweite Zahnrad (30) um eine zur ersten Drehachse (20) parallele zweite Drehachse (40) drehbar gelagert sind und wobei das erste Zahnrad (10) nach zumindest einem der vorhergehenden Ansprüche 1 bis 6 ausgebildet ist und das zweite Zahnrad (30) nach zumindest einem der vorhergehenden Ansprüche 7 oder 8 ausgebildet ist.

10. Betätigungseinheit (50) für Fenster, Türen oder dergleichen, mit einem Griff (54) und einem drehfest mit dem Griff (54) gekoppelten oder koppelbaren Betätigungselement (52), **dadurch gekennzeichnet,**
**dass** das Betätigungselement (52) ein Zahnrad (10) nach zumindest einem der Ansprüche 1 bis 6 umfasst, insbesondere wobei das Betätigungselement (52) durch einen Vierkantstift mit im Wesentlichen quadratischem Querschnitt gebildet ist.

11. Beschlag für Fenster, Türen oder dergleichen, insbesondere für zweiflügelige, setzholzfreie Fenster, Türen oder dergleichen, mit einer Treibstange (44), einer Stulpschiene (46) und einem Getriebe (48) mit einem Eingangszahnrad (10), **dadurch gekennzeichnet,**
**dass** als Eingangszahnrad (10) ein Zahnrad nach einem der Ansprüche 1 bis 6 vorgesehen ist.

12. Beschlag für Fenster, Türen oder dergleichen nach Anspruch 11, **dadurch gekennzeichnet,**
**dass** der Beschlag eine Betätigungseinheit (50) nach Anspruch 10 umfasst, wobei das Zahnrad (10) des Betätigungselements (52) der Betätigungseinheit (50) das Eingangszahnrad (10) des Getriebes (48) bildet und wobei das Eingangszahnrad (48) in dem Getriebe (48) um eine erste Drehachse (20) drehbar gelagert ist.

13. Beschlag nach Anspruch 12,
**dadurch gekennzeichnet,**
**dass** die erste Drehachse (20) von einer Stirnseite (64) des Beschlags her betrachtet vor einer Hauptebene (66) der Stulpschiene (46) liegt und das Getriebe (48) ein um eine zweite Drehachse (40) drehbar gelagertes Übersetzungszahnrad (72) mit einer Antriebs-Verzahnung (36) und einer Abtriebs-Verzahnung (74) aufweist, wobei die Antriebs-Verzahnung (36) ausgebildet ist, um mit dem Eingangszahnrad (10) zu kämmen, und die Abtriebs-Verzahnung (74) mit entsprechenden Ausnehmungen (76) der Treibstange (44) kämmt und wobei die Abtriebs-Verzahnung (74) bezogen auf die zweite Drehachse (40) einen größeren Radius (r) aufweist als die Antriebs-Verzahnung (36).

14. Fenster, Tür oder dergleichen, insbesondere zweiflügeliges, setzholzfreies Fenster oder zweiflügelige, setzholzfreie Tür, mit einem in einer Falznut (58) eines Flügels (62) des Fensters, der Tür oder dergleichen angeordneten Beschlag nach Anspruch 12 oder 13.

15. Fenster, Tür oder dergleichen nach Anspruch 14,
**dadurch gekennzeichnet,**
**dass** das Getriebe (48) bereichsweise in einer Falzluft (82) zwischen den einander gegenüberliegenden Falzen (60) zweier Flügel (62) des Fensters, der Tür oder dergleichen angeordnet ist und das Betätigungselement (52) eine Schlagleiste (84) des Flügels (62), in dem das Getriebe (48) angeordnet ist, durchgreift, insbesondere wobei die erste Drehachse (20) bezogen auf eine Breite der Falzluft (82) ungefähr mittig in der Falzluft (82) angeordnet ist.
